# EUROPEAN PATENT APPLICATION

(11) **EP 2 679 965 A2**
(43) Date of publication of application: **01.01.2014**
(21) Application number: 13173054.1
(22) Date of filing: 20.06.2013
(51) Int. Cl.: G01D 13/04

(54) **Needle indicator oriented by periphery electromagnets**

(30) Priority: 27.06.2012 US 201213534009
(71) Applicant: Delphi Technologies, Inc., Troy, MI 48007 (US)
(72) Inventor: Liburdi, Steven A., Grosse Pointe Farms, MI 48236 (US); Blackmer, Stephen C., Millington, MI 48746 (US)
(74) Representative: Robert, Vincent

(57) **Abstract**

A needle indicator assembly (20) that includes a pointer (22) formed at least in part of magnetized material, and configured to rotate about an axis (24) and thereby define an area (26) swept by the pointer (22). The assembly also includes a plurality of electromagnets (32) arranged around a perimeter (34) of the area (26), said electromagnets (32) operable to urge the pointer (22) to point in a desired direction (28). An instrument panel (12) equipped this needle assembly overlying a reconfigurable display (18) gives the appearance that the pointer (22) is floating above the display (18), and the means by which the pointer (22) is moved is not readily apparent.

## Description

### TECHNICAL FIELD OF INVENTION

This disclosure generally relates to vehicle instrument panels, and more particularly relates to a needle indicator that positions or orients a magnetized pointer using electromagnets arranged around a perimeter or periphery of the indicator.

### BACKGROUND OF INVENTION

Traditional vehicle instrument panel needle indicators or gauge pointers that are positioned or rotated about an axis are known. Such traditional needle indicators are rotated by a permanent magnet attached to a shaft that is coupled to the pointer and located at the axis. The permanent magnet is typically urged to some angle by an electromagnet. Reconfigurable instrument panels that use flat display technology such as arrays of light emitting diodes (i.e. LED display) or liquid crystal devices (i.e. LCD display) have been introduced. However, the flat, two-dimensional appearance of such displays is not as aesthetically pleasing to some customers as the traditional needle indicator type displays. It has been proposed that the reconfigurable display be overlaid with a needle indicator. However, the permanent magnet and electro magnet undesirably obstruct too much of the reconfigurable display proximate to the axis. It has also been proposed that the permanent magnet and electromagnet be located behind the reconfigurable display, and the shaft extended through the reconfigurable display. However, this requires providing a hole in the reconfigurable display that makes manufacturing of the reconfigurable display undesirable complicated and costly.

### SUMMARY OF THE INVENTION

In accordance with one embodiment, a needle indicator assembly is provided. The assembly includes a pointer and a plurality of electromagnets. The pointer is formed at least in part of magnetized material. The pointer is configured to rotate about an axis and thereby define an area swept by the pointer. The plurality of electromagnets is arranged around a perimeter of the area. The electromagnets are operable to urge the pointer to point in a desired direction. The assembly further comprises a lens formed of transparent material and arranged to overlay the area. The assembly further comprises a bearing coupled to the lens proximate the axis. The bearing is configured to rotationally support the pointer. The assembly further comprises a controller configured to independently operate each of the electromagnets to one of a NORTH-POLE state, a SOUTH-POLE state, and an OFF state.

In another embodiment, an instrument panel is provided. The instrument panel includes a reconfigurable display, a magnetized pointer, and a plurality of electromagnets. The pointer overlies the display. The pointer is configured to rotate about an axis and thereby define an area swept by the pointer. The plurality of electromagnets is arranged around a perimeter of the area. The electromagnets are operable to urge the pointer to point in a desired direction. The instrument further comprises a housing configured to support the reconfigurable display, the magnetized pointer and the electromagnets. The housing is further configured to provide attachment features for securing the instrument panel to a vehicle dashboard.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a perspective view of a vehicle interior equipped with an instrument panel that includes a needle pointer assembly in accordance with one embodiment;

Fig. 2 is a perspective view of the instrument panel of Fig. 1 in accordance with one embodiment;

Fig. 3 is an exploded perspective view of the instrument panel of Fig. 1 in accordance with one embodiment; and

Fig. 4 is a front view of the needle assembly of Fig. 3 in accordance with one embodiment.

### DETAILED DESCRIPTION

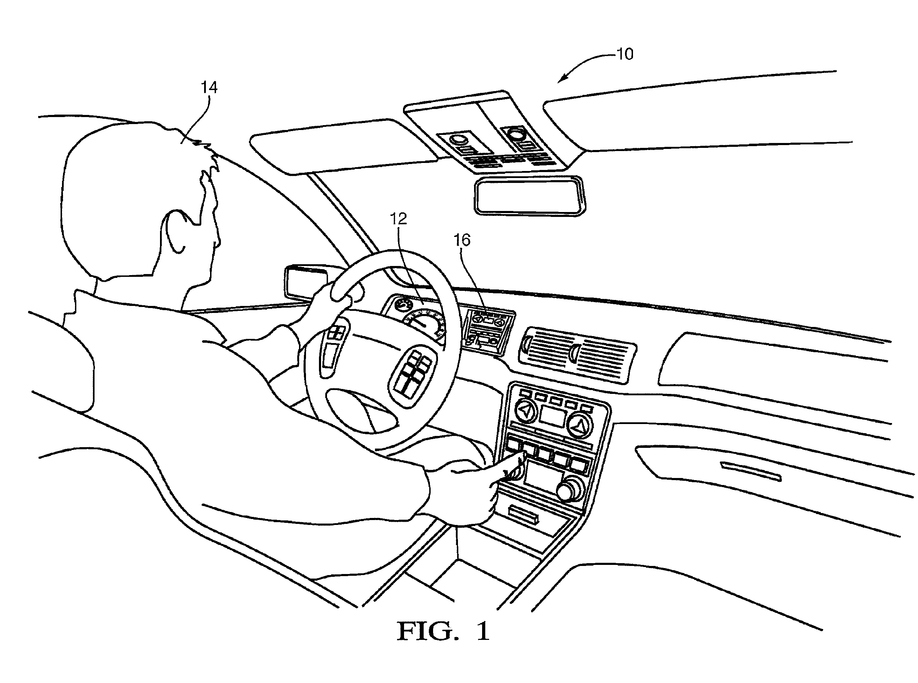

Fig. 1 illustrates a non-limiting example of a vehicle 10 equipped with an instrument panel 12 installed into a dashboard 16 of the vehicle 10. In general, the instrument panel 12 displays information to an operator 14 of the vehicle 10 such as vehicle speed, engine coolant temperature, and the like.

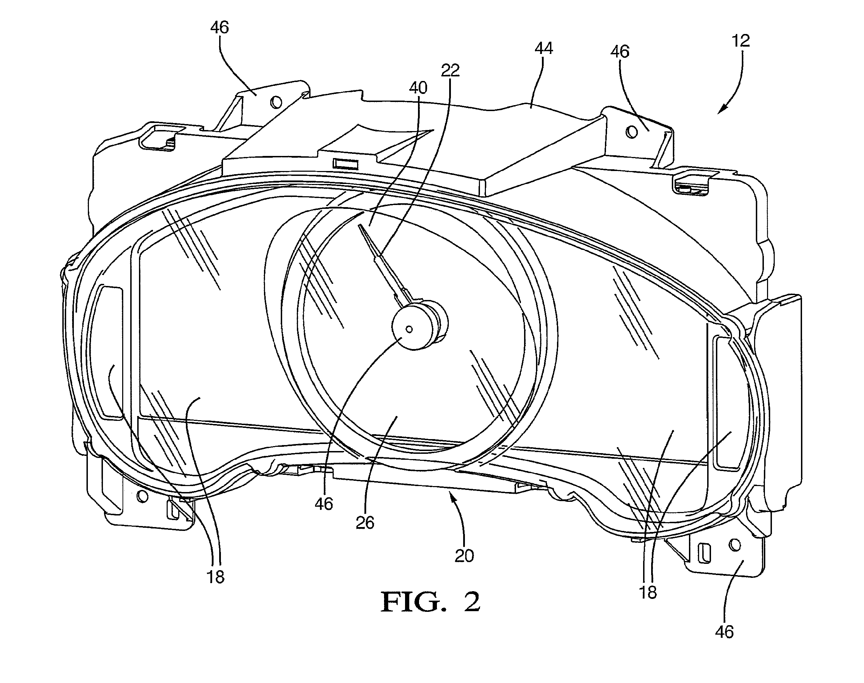

Fig. 2 illustrates a non-limiting example of the instrument panel 12 as it might appear when not installed into the dashboard 16 of the vehicle 10. In general, the instrument panel 12 includes a reconfigurable display, hereafter the display 18. In this example the display 18 spans most of the viewing area of the instrument panel 12. As used herein, a reconfigurable display includes, but is not limited to, any device that can display images in a manner similar to a display screen on a personal computer. For example, the display 18 may include arrays of light emitting diodes (i.e. an LED display) or liquid crystal devices (i.e. an LCD display). Alternatively, the display 18 may be an applique that defines various symbols which become visibly apparent to the operator 14 when suitably backlit. It is recognized that an applique would not be as versatile for displaying a wide variety of information, but is believed to be a lower cost alternative to a fully reconfigurable display.

The instrument panel 12 also includes a needle indicator assembly 20 overlaying the display 18. In general, most of the area of the needle indicator assembly 20 is substantially transparent so the operator 14 can see through the needle indicator assembly 20 to see the display 18 behind the needle indicator assembly 20.

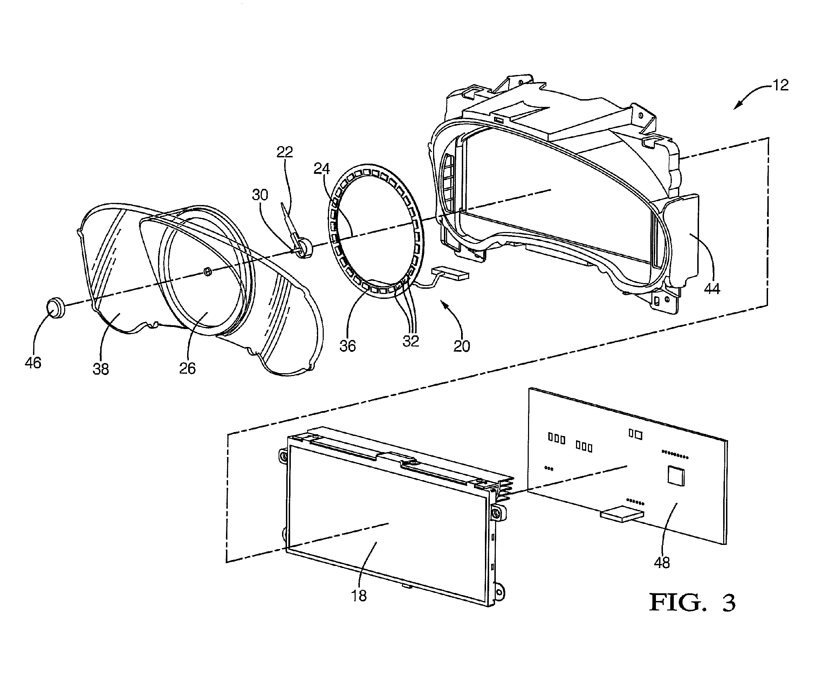

Fig. 3 is an exploded view of Fig. 2 that further illustrates non-limiting features of the instrument panel 12. The needle indicator assembly 20 includes a magnetized pointer, hereafter the pointer 22, overlaying the display 18. In general, the pointer 22 is configured to rotate about an axis 24, and so defines an area 26 swept by the pointer 22. The instrument panel 12 or the needle indicator assembly 20 may also include a lens 38 formed of transparent material and arranged to overlay the area 26. In this non-limiting example, the lens 38 is part of a larger protective cover formed of transparent material so the operator 14 can see the display 18 behind the area 26 as well as outside the area 26.

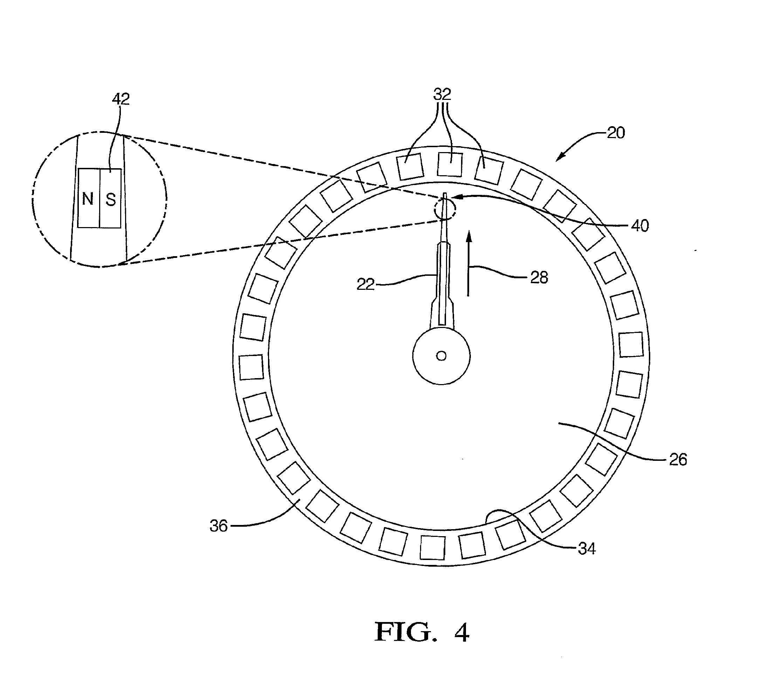

The pointer 22 may be characterized as magnetized as it may be entirely, or partially, formed of magnetic material. For example, the magnetic material may be material suitable for making permanent magnets, or other ferromagnetic material such as iron. In other words, the pointer 22 may be formed entirely or partially of a permanent magnet, or material that can be temporarily magnetized in the presence of a magnetic field. If only a tip portion 40 (Fig. 4) of the pointer 22 is formed of magnetic material, for example a permanent magnet, the remaining portion of the pointer 22 may be formed of a polymeric compound. As will become apparent in the explanation that follows, the pointer 22 is formed partially or entirely of magnetic material so that the pointer 22 itself is urged to some particular orientation by a magnetic field in order to point in a desired direction 28 (Fig. 4). This configuration advantageously avoids the more traditional configuration of having a separate permanent magnet coupled to the pointer by a shaft on the axis 24, and an electromagnet proximate to the separate permanent magnet, as these parts would undesirable obscure the view of the display 18 proximate the pointer 22.

In order to generate a suitable magnetic field to orient the pointer 22 in the desired direction 28, the needle indicator assembly 20 may include a plurality of electromagnets 32 arranged around a perimeter 34 of the area 26. By way of example and not limitation, the electromagnets 32 may be a coil of wire wound on an iron bobbin, and attached to a printed circuit board 36 or other suitable substrate. Alternatively, the coil of wire may be wound on a bobbin formed of polymeric material. It should be recognized that each of the electromagnets 32 may include two conductive leads (not shown) coupled to an H-bridge circuit (not shown) so that a positive, negative, or zero current can be established in each of the electromagnets 32 and thereby generate a NORTH magnetic field, a SOUTH magnetic field, or a null or OFF magnetic field. It should also be recognized that the strength or intensity of the magnetic field is generally proportional to the magnitude of current flowing in an electromagnet. As is known in the art, the magnitude of current may be controlled by pulse-width-modulation of the signal applied to the electromagnets 32. Accordingly, the electromagnets 32 are operable to urge the pointer 22 to point in a desired direction 28.

Fig. 4 further illustrates the non-limiting example of the needle indicator where the tip portion 40 is formed of a permanent magnet 42 oriented as illustrated. It is recognized that other orientations of permanent magnet may also be suitable to urge the pointer 22 to point in the desired direction. In one embodiment, the electromagnets 32 are oriented so that when a positive current is applied, a NORTH magnetic field is projected towards the center of the area 26, and a SOUTH magnetic field is projected away from the center of the area 26. If only one of the electromagnets 32 is energized, then the pointer 22 will be urged to a particular orientation. If an adjacent electromagnet is energized, then the pointer can be incrementally positioned away from the particular orientation. It should be apparent that by energizing combinations of the electromagnets 32 that the pointer can be incrementally positioned to any orientation, and is not limited to being positioned at only a number of distinct orientations corresponding to the number of the electromagnets 32.

Referring again to Figs. 2 and 3, the instrument panel 12 may also include a housing configured to support the display 18, the magnetized pointer (the pointer 22), and the electromagnets 32. The housing 44 may also provide attachment features 46, such as mounting tabs or other means known in the art for securing the instrument panel 12 to the dashboard 16.

The instrument panel 12 or the needle indicator assembly 20 may also include a bearing 46 coupled to the lens 38 proximate the axis 24 to rotationally support the pointer 22. The bearing 46 may include features known in the art to damp motion of the pointer 22, and may include an optional return spring (not shown) configured to urge the pointer to some preferred orientation when all the electromagnets 32 are deactivated. It should be recognized that the instrument panel 12 or the needle indicator assembly 20 do not require a return spring, but a return spring may be desired by some customers.

The instrument panel 12 may also include a controller 48 configured to independently operate each of the electromagnets 32 to one of a NORTH-POLE state, a SOUTH-POLE state, and an OFF state. These states may be by way of applying, for example, a positive current, a negative current, or zero current, respectively. The controller 48 may include a processor such as a microprocessor or other control circuitry as should be evident to those in the art. The controller 48 may include memory, including non-volatile memory, such as electrically erasable programmable read-only memory (EEPROM) for storing one or more routines, thresholds and captured data. The one or more routines may be executed by the processor to perform steps for controlling the orientation of the pointer 22 to, for example, the desired direction 28.

By way of example and not limitation, the display 18 and the needle indicator assembly 20 may be cooperatively operated to provide a speedometer by the display 18 showing a circular arrangement of numbers corresponding to potential vehicle speeds in the area 26. Then, the needle indicator assembly 20 may be operated so the pointer 22 is oriented to indicate the present speed of the vehicle. However, if an indication of engine speed is desired, the display may be reconfigured to display a circular arrangement of numbers corresponding to potential engine speeds in the area 26. Then, the needle indicator assembly 20 may be operated so the pointer 22 is oriented to indicate the present revolutions per minute (RPM) speed of the engine. The configuration of the display may be altered by the operator 14 pressing a button on the dashboard 16 as suggested in Fig. 1.

Accordingly, an instrument panel 12 and a needle indicator assembly 20 is provided. These satisfy the desires of customers requiring a mechanical pointer in front of an LCD display, with no visible bridge between the pointer 22 and the display 18. As such, the pointer 22 appears to be floating above the display 18, creating for some an entertaining mystery as to how it functions.

While this invention has been described in terms of the preferred embodiments thereof, it is not intended to be so limited, but rather only to the extent set forth in the claims that follow.

## Claims

1. A needle indicator assembly (20) comprising:
a pointer (22) formed at least in part of magnetized material, said pointer (22) configured to rotate about an axis (24) and thereby define an area (26) swept by the pointer (22); and
a plurality of electromagnets (32) arranged around a perimeter (34) of the area (26), said electromagnets (32) operable to urge the pointer (22) to point in a desired direction (28).

2. Assembly as in any previous claims, wherein said assembly further comprises a lens (38) formed of transparent material and arranged to overlay the area (26).

3. Assembly as in any previous claims, wherein said assembly further comprises a bearing (46) coupled to the lens (38) proximate the axis (24), said bearing (46) configured to rotationally support the pointer (22).

4. Assembly as in any previous claims, wherein said assembly further comprises a controller (48) configured to independently operate each of the electromagnets (32) to one of a NORTH-POLE state, a SOUTH-POLE state, and an OFF state.

5. An instrument panel (12) comprising a needle indicator assembly (20) as claimed in any preceding claim.

6. The instrument panel (12) in accordance with claim 5, wherein said instrument panel (12) further comprises a housing (44) configure to support the magnetized pointer (22), and the electromagnets (32), said housing (44) further configured to provide attachment features (46) for securing the instrument panel (12) to a vehicle (10) dashboard (16).
